# EUROPEAN PATENT APPLICATION

(11) **EP 2 568 378 A1**
(43) Date of publication of application: **13.03.2013**
(21) Application number: 11840906.9
(22) Date of filing: 08.11.2011
(51) Int. Cl.: G06F 9/48

(54) **METHOD FOR CHANGING USER OPERATION INTERFACE AND TERMINAL**

(30) Priority: 18.11.2010 CN 201010549510
(71) Applicant: Huawei Device Co., Ltd., Longgang District Shenzhen Guangdong 518129 (CN)
(72) Inventor: WANG, Pei, Shenzhen Guangdong 518129 (CN); DENG, Junjie, Shenzhen Guangdong 518129 (CN)
(74) Representative: Goddar, Heinz J.
(86) International application number: PCT/CN2011/081895
(87) International publication number: WO 2012/065518

(57) **Abstract**

A method and a terminal for changing a user operation interface are provided. The method for changing the user operation interface includes: determining user identity information; according to the user identity information, searching for main interface functional objects corresponding to the user identity information; and applying the found main interface functional objects on a preset display interface. User identity information is identified, and corresponding main interface functional objects are displayed according to the user identity information, thereby solving a problem in the conventional art that when a user is switched, continuously repeated settings are needed before the user operation interface is displayed. In an application scenario of multiple users, it is not required to repeatedly set the main interface functional objects when the user is changed, and the main interface functional objects corresponding to the user identity information are directly invoked and applied, which simplifies an operation process.

## Description

This application claims priority to Chinese Patent Application No. 201010549510.6, filed with the Chinese Patent Office on November 18, 2010 and entitled "METHOD AND TERMINAL FOR CHANGING USER OPERATION INTERFACE," which is incorporated herein by reference in its entirety.

### FIELD OF THE INVENTION

The present invention relates to the field of communication technologies, and in particular, to a method and a terminal for changing a user operation interface.

### BACKGROUND OF THE INVENTION

With the universality of the Internet service and a user's increasingly diversified requirements on information, a network carrier gradually constructs an information assistant and information service platform for the user, and interacts with the user by using a terminal device with a display screen as a medium, so as to meet the user's requirements.

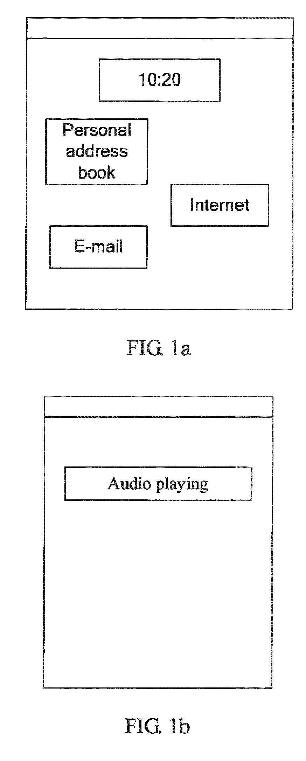

As a result, richer and richer contents are presented on a main interface of the terminal device, and a multiple-display interface design represented by an Android product comes out. Terminal devices of this type place main interface functional objects, such as shortcuts and icons of various application programs, on different display interfaces, respectively, and implement switching between different display interfaces in a manner, such as sliding horizontally, to browse contents on different interfaces in sequence. FIGS. 1a and 1b show multiple-display interfaces of an Android terminal device. A display interface shown in FIG. 1a is set with shortcuts of a clock, contact information of various types, and certain application programs. Slide horizontally with a finger to the left or right to browse a next display interface. An interface shown in FIG. 1b is set with application programs such as an audio playing program. The user may place main interface functional objects on various display interfaces according to the user's habit, respectively.

However, when the foregoing terminal device is applied to a scenario of multiple users, for example, when a user B replaces a user A to use the foregoing terminal device, the user B changes, according to its requirements, contents of the main interface and/or display interfaces set by the user A, and then, performs the displaying of reset main interface functional objects through the display interfaces, thereby completing changing of a user operation interface. Therefore, in the process of implementing the present invention, the inventor finds by research that, in the method for changing the user operation interface in the conventional art, continuously repeated settings among various users are needed before displaying, which is not applicable to a usage scenario of multiple users.

### SUMMARY OF THE INVENTION

Embodiments of the present invention provide a method and a terminal for changing a user operation interface, which are applicable to a usage scenario of multiple users.

In order to solve the foregoing technical problem, the technical solutions of the embodiments of the present invention are as follows:

An embodiment of the present invention provides a method for changing a user operation interface, including:
determining user identity information;
according to the user identity information, searching for main interface functional objects corresponding to the user identity information; and
applying the found main interface functional objects on a preset display interface.
An embodiment of the present invention further provides a terminal, including:
an identity identifying module, configured to determine user identity information;
an information searching module, configured to, according to the user identity information, search for main interface functional objects corresponding to the user identity information; and
an information displaying module, configured to apply the found main interface functional objects on a preset display interface.

In the conventional art, when a method for changing a user operation interface is applied to a scenario of multiple users, every time a user is changed, main interface functional objects to be displayed needs to be set repeatedly before being displayed. The operation process is complicated. In embodiments of the present invention, the user identity information is identified, and corresponding main interface functional objects are applied according to the user identity information, so that the foregoing problem is solved. In an application scenario of multiple users, when the user is changed, contents of a main interface do not need to be set repeatedly, and main interface functional objects corresponding to the user may be directly invoked for applying and displaying, which greatly simplifies the operation process.

### BRIEF DESCRIPTION OF THE DRAWINGS

To illustrate the technical solutions in the embodiments of the present invention or in the conventional art more cleanly, the accompanying drawings required for describing the embodiments or the conventional art are introduced briefly in the following. Apparently, the accompanying drawings in the following description are merely some embodiments of the present invention, and persons of ordinary skill in the art can further derive other drawings according to the accompanying drawings without making creative efforts.
FIG. 1 is a schematic diagram of a display interface of a terminal device in the conventional art;
FIG .2 is a flow chart of a method for changing a user operation interface according to an embodiment of the present invention;
FIG. 3 is a flow chart of a method according to a first embodiment of the present invention;
FIG. 4 is a flow chart of a method according to a second embodiment of the present invention;
FIG. 5 is a schematic structural diagram of a terminal according to an embodiment of the present invention;
FIG 6 is a schematic structural diagram of another terminal according to an embodiment of the present invention; and
FIG. 7 is a schematic structural diagram of another terminal according to an embodiment of the present invention.

### DETAILED DESCRIPTION OF THE EMBODIMENTS

To enable persons skilled in the art to further understand characteristics and technical contents of embodiments of the present invention, reference may be made to the following detailed description related to the embodiments of the present invention and the accompanying drawings. The accompanying drawings are provided for reference and description only, and are not intended to limit the present invention.

In the conventional art, when a method for changing a user operation interface is used by a single user, main interface functional objects may be displayed on each display interface according to a user's requirements or habits; however, when the method is applied to a scenario of multiple users, the user needs to change main interface functional objects and/or a display interface that are set by another user, and then reset main interface contents to be displayed through the display interface to complete the changing of the user operation interface. Therefore, the method in the conventional art for displaying the main interface contents needs continuously repeated settings among various users before displaying, which is not applicable to a usage scenario of multiple users. In the embodiments of the present invention, by identifying a user identity, for example, each member in a family, and displaying corresponding main interface functional objects according to the user identity, solve the problem existing in the conventional art.

The technical solutions of the embodiments of the present invention are described in the following with reference to the accompanying drawings and the embodiments.

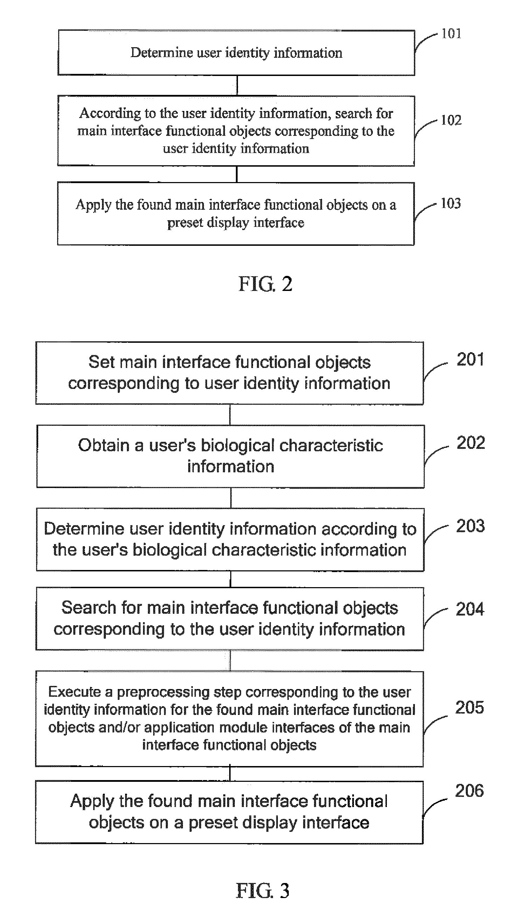

FIG. 2 is a flow chart of a method for changing a user operation interface according to an embodiment of the present invention.

The method may include:
Step 101: Determine user identity information.

For the usage scenario of multiple users, in the embodiments, identity information of multiple users may be pre-stored; when the user starts to operate a terminal device or a user is changed, identifying of the user identity information is triggered so as to display different main interface contents for different users subsequently. The identifying may be in multiple manners, and for details, reference may be made to the descriptions of subsequent embodiments. Before this step, according to identity information of different users, corresponding main interface functional objects may be preconfigured, respectively, for subsequent invoking.

The user identity information is pre-stored in the terminal and is used for indicating information of a user's identify, for example, each member in a family: the old, husband, wife, child, or stranger. The main interface functional objects may be objects located on a main interface and used for the user to execute relevant functional operations, such as application programs, shortcuts, and various functional icons.

Step 102: According to the user identity information, search for main interface functional objects corresponding to the user identity information.

After the user identity information is determined, main interface functional objects corresponding to the user identity information may be found according to a list of correspondence between the user identity information which is pre-stored in the terminal and the main interface functional objects; and property settings of all main interface functional objects may be checked one by one. For example, the property setting of a certain application program A is as follows: when user identity information is a, not displayed (shielded or hidden), and when user identity information is b, allowed to be displayed, so that main interface functional objects corresponding to certain user identity information may be determined. Definitely, another manner may also be adopted, which is not limited here.

Step 103: Apply the found main interface functional objects on a preset display interface.

The main interface functional objects to be displayed can be displayed on the preset display interface after being determined according to the user identity information. Definitely, there may be one or multiple display interfaces. For a case that there are multiple display interfaces, a method of the conventional art may be adopted, for example, the multiple display interfaces may be browsed in a manner such as sliding horizontally with a finger.

In the conventional art, when the method for changing the user operation interface is applied to the scenario of multiple users, every time the user is changed, main interface contents to be displayed need to be repeatedly set before being displayed. The operation process is complicated. In the embodiment of the present invention, user identity information is identified, and corresponding main interface functional objects are displayed according to the user identity information, so that the foregoing problem is solved. In an application scenario of multiple users, when the user is changed, main interface functional objects do not need to be set repeatedly, and main interface functional objects corresponding to the user identity information may be directly invoked and displayed, which greatly simplifies the operation process.

So far, in the existing family-oriented terminal device, main interface functional objects are sorted only by function, and different main interface functional objects cannot be displayed for each family member. The method for solving the foregoing problem is described in the following through specific embodiments.

FIG. 3 is a flow chart of a method according to a first embodiment of the present invention.

The method may included:
Step 201: Set main interface functional objects corresponding to user identity information.

In this step, the user identity information may be set in a terminal first, for example, each family member: the old, husband, wife, and child; and then, these users' characteristic information are obtained and stored as a basis for identifying the user identity information subsequently. In the embodiment, biological characteristic information is taken as an example for a user's characteristic information. And then, according to identity information of different users, corresponding main interface functional objects may be preconfigured, respectively, for invoking subsequently. For example, a list of correspondence between the user identity information and the main interface functional objects may be preset in the terminal; and properties of all main interface functional objects may be set one by one according to the user identity information. The setting may be performed by users according to their requirements and preferences in advance.

For example, for the user identity information which is of the old, complex application programs in corresponding main interface functional objects may be shielded or not displayed; for the user identity information, which is of a child, shortcuts of malicious websites in corresponding main interface functional objects may be shielded; for the user identity information which is of a wife, contents or application programs of the wife's interest may be included in corresponding main interface functional objects, such as diet and clothing; and for the user identity information which is of a husband, contents or application programs of the husband's interest may be included in corresponding main interface functional objects, such as stocks and news on current events.

Step 202: Obtain the user's biological characteristic information.

In this step, the user's biological characteristic information is obtained so that user identity information may be identified. Specifically, the foregoing obtaining the biological characteristic information may be obtaining the user's voice information, or obtaining the user's fingerprint information, or obtaining the user's facial information, and so on.

The obtaining action may be triggered for execution when the user starts to perform operations on a terminal device, for example, when the user powers on the terminal device, the user's facial characteristic information is obtained by triggering scanning the user's face, or a prompt dialog box is popped up to prompt the user to input a fingerprint, or the user may be prompted to look at a certain area on a screen for face or retina scanning, so that the user's characteristic information is obtained. The obtaining operation may also be triggered when a user is changed during a usage process. For example, the terminal device monitors the user's certain biological characteristic information in real time or in a roughly and periodically monitoring manner; when the user is changed from a user A to a user B, and the device detects that the user's biological characteristic information changes, the device triggers obtaining the user B's characteristic information so as to invoke and display main interface functional objects corresponding to the user B; or an area may be set at a predetermined position on a screen, and when the user changes, the user B directly inputs characteristic information such as a fingerprint in the area, and after the information is received, the device invokes and displays main interface functional objects corresponding to the user identity information that is determined according to the information. In addition, there may also be many manners. Definitely, the foregoing-described device restart may also be adopted and then the obtaining the user's characteristic information is triggered.

Step 203: Determine user identity information according to the user's biological characteristic information.

After the user's biological characteristic information is obtained, in this step, the obtained information needs to be compared with the stored characteristic information to check whether the characteristic information matches. Definitely, when the user's biological characteristic information is compared with the certain pre-stored biological characteristic information, a matching threshold value may be set. As long as a parameter value measuring a matching degree exceeds the threshold value, the information is considered as matching, and identity information corresponding to the found matching characteristic information is used as the user identity information.

For example, if the obtained user's biological characteristic information matches the pre-stored biological characteristic information where the identity information is of the old, it may be confirmed that the user identity information represents the old among the family members.

Step 204: Search for the main interface functional objects corresponding to the user identity information.

After the user identity information is determined, main interface functional objects corresponding to the user identity information may be found according to a list of correspondence between the user identity information which is pre-stored in the terminal and the main interface functional objects; and property settings of all main interface functional objects may be checked one by one. For example, the property setting of a certain application program A is: When the user identity information is a, not displayed (shielded or hidden), and when the user identity information is b, allowed to be displayed, so that main interface functional objects corresponding to certain user identity information may be determined.

In this embodiment, when an identifying result is not a family member, that is, no characteristic information matching the user's biological characteristic information can be found in the terminal, or the identified user identity information represents a stranger, main interface functional objects that can be made public may be displayed, and information involving privacy in the main interface functional objects, such as short messages and contacts, may be shielded.

Step 205: Execute a preprocessing step corresponding to the user identity information for the found main interface functional objects and/or application module interfaces of the main interface functional objects.

In the embodiment, when the found main interface functional objects are displayed, main interface contents may be preprocessed according to the user identity information. For example, if the user identity information represents the old, the fonts and image elements of the found main interface functional objects and/or the application module interfaces of the main interface Functional objects may be magnified. The application module interfaces of the main interface functional objects may be contents displayed after a certain application module or application program in the main interface functional objects is opened. For example, for E-mail on a main interface, not only an icon and the font of E-mail can be magnified, but also E-mail contents displayed after an E-mail is opened can be magnified. If the user identity information represents a child, when the found main interface objects are displayed, preprocessing such as shielding may be performed on some malicious websites. The positions on a preset display interface may also be changed for the found main interface functional objects and/or the application module interfaces of the main interface functional objects, for example, the layout of the display interface. A wallpaper of a display interface where the found main interface functional objects and/or the application module interfaces of the main interface functional objects are located may also be changed, for example, when the user identity information represents a child, the wallpaper may be changed to be of a cartoon pattern. The foregoing preprocessing may be set by the user according to requirements.

Step 206: Apply the found main interface functional objects on the preset display interface.

After the main interface functional objects are processed, in this step, the processed main interface functional objects are applied through one or more preset display interfaces.

In the embodiment of the present invention, the user identity information is identified, and corresponding main interface functional objects are displayed according to the user identity information, so that in an application scenario of multiple users, when the user is changed, the main interface functional objects are not required to be repeatedly set, and the main interface functional objects corresponding to the user identity information are directly invoked and applied, which greatly simplifies an operation process and facilitates keeping user information confidential.

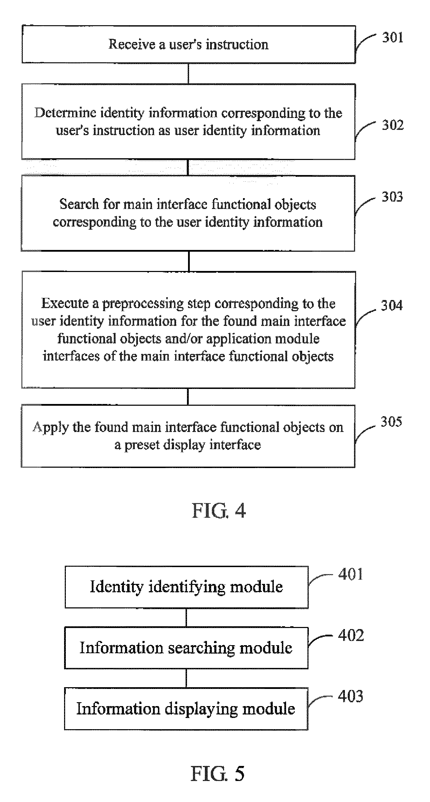

FIG. 4 is a flow chart of a method according to a second embodiment of the present invention.

The method may include:
Ste 301: Receive a user's instruction.

Before this step, user identity information, for example, various family members: the old, husband, wife, and child, may be set in a terminal first, and then corresponding main interface functional objects may be set according to the user identity information.

When the user starts to perform operations on a terminal device, the user inputs an instruction which is used for indicating the user identity information into the terminal device. For example, according to a preset rule, input "1" to represent the old, and input "2" to represent a wife. Alternatively, the user may also select, for example, "Old", "Child", "Husband", and "Wife", according to keys set on the terminal or names displayed at a specific position of a display screen, to trigger an instruction, and the terminal device can receive the user's instruction.

Step 302: Determine identity information corresponding to the user's instruction as the user identity information.

After receiving the user's instruction, the terminal device may determine the user identity information according to the instruction. For example, when the user clicks an option named "Old" on a lower part of the display screen of the terminal, an instruction corresponding to the option may be triggered; after receiving the instruction, the terminal may determine, according to the identity information corresponding to the instruction, that the user identity information represents the old.

Step 303: Search for the main interface functional objects corresponding to the user identity information.

After determining the user identity information, main interface functional objects corresponding to certain user identity information may be determined according to a list of correspondence between the user identity information which is pre-stored in the terminal and the main interface functional objects, or by checking property settings of all main interface functional objects one by one.

Step 304: Execute a preprocessing step corresponding to the user identity information for the found main interface functional objects and/or application module interfaces of the main interface functional objects.

This step is similar to that of the foregoing embodiment, which is not repeatedly described here again.

Step 305: Apply the found main interface functional objects on a preset display interface.

After the main interface functional objects are processed, in this step, the processed main interface functional objects are applied through one or more preset display interfaces.

The foregoing embodiment may also be used for a manner that the user checks main interface functional objects of another family member, which may be by sliding the screen horizontally or by clicking a Tab of another family member on the lower part of the screen. The names of these tabs may be defined by the user. When the screen is slided or a member a is clicked, the terminal can display a page of main interface functional objects which belong to the member a, and the display interface presents contents which are focused by the member a in a centralized way.

In the embodiment of the present invention, the user identity information is identified, and corresponding main interface functional objects are displayed according to the user identity information, so that in an application scenario of multiple users, the main interface functional objects are not required to be repeatedly set when the user is changed, and the main interface functional objects corresponding to the user are directly invoked and displayed, which greatly simplifies an operation process.

In the embodiment of the present invention, a brand-new manner for classifying main interface functional objects of a family-oriented electronic product is proposed, and the tradition of formerly not classifying or classifying according to the type of functions is broke up, so that this type of electronic products really show the orientation for family members, and that family members may find information of their interest more conveniently and have their personal space on the display interface, which greatly improves ease of use and affinity of the products.

The method according to embodiments of the present invention is introduced in the foregoing; a terminal device which applies the foregoing method is described in the following.

FIG. 5 is a schematic structural diagram of a terminal according to an embodiment of the present invention.

The terminal device may include:
an identity identifying module 401, configured to determine user identity information;
an information searching module 402, configured to, according to the user identity information, search for main interface functional objects corresponding to the user identity information; and
an information displaying module 403, configured to apply the found main interface functional objects on a preset display interface.

When a user starts to perform operations on a terminal device, the identity identifying module 401 of the terminal device identifies the user identity information first. There are multiple identifying manners, and for details, reference may be made to the descriptions of subsequent embodiments. An then, the information searching module 402 may determine main interface functional objects corresponding to certain user identity information according to a list of correspondence between user identity information pre-stored in the terminal and the main interface functional objects, or by checking property settings of all main interface functional objects one by one. Finally, after main interface functional objects to be displayed are determined according to the user identity information, the information displaying module 403 applies the main interface functional objects on the preset display interface. Definitely, there may be one or multiple display interfaces.

In the embodiment of the present invention, the foregoing modules are used to identify the user identity information and display corresponding main interface functional objects according to the user identity information, so that the foregoing problem is solved. In an application scenario of multiple users, the main interface functional objects are not required to be repeatedly set when the user is changed, and the main interface functional objects corresponding to the user identity information are directly invoked and applied, which greatly simplifies an operation process.

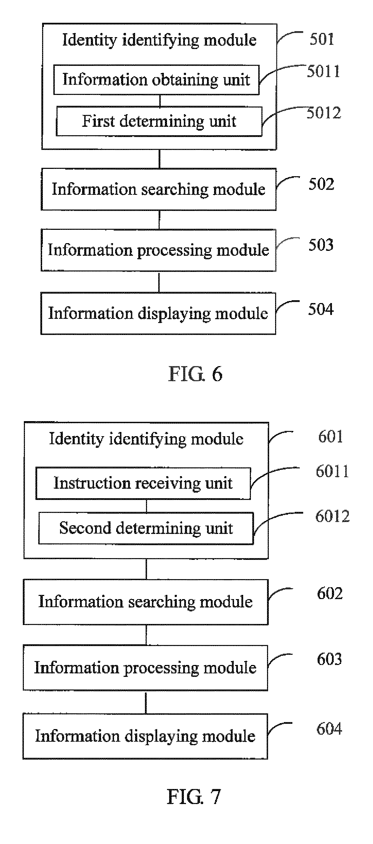

FIG. 6 is a schematic structural diagram of another terminal according to an embodiment of the present invention.

The terminal device may include an identity identifying module 501, an information searching module 502, an information processing module 503, and an information displaying module 504. The information searching module 502 and the information displaying module 504 are similar to those of the foregoing embodiment and are not be described repeatedly here again.

In the embodiment, the identity identifying module 501 may include:
an information obtaining unit 5011, configured to obtain a user's biological characteristic information; and
a first determining unit 5012, configured to search a pre-stored characteristic information base for characteristic information matching the user's biological characteristic information, and use identity information corresponding to the found matching characteristic information as user identity information.

The information obtaining unit 5011 may be specifically configured to obtain the user's voice information, or obtain the user's fingerprint information, or obtain the user's facial information.

The information processing module 503 is configured to execute a preprocessing step corresponding to the user identity information for the found main interface functional objects and/or application module interfaces of the main interface functional objects. In another embodiment, the information processing module may be specifically configured to magnify fonts of the found main interface functional objects and/or the application module interfaces of the main interface functional objects; or change positions on the preset display interface for the found main interface functional objects and/or the application module interfaces of the main interface functional objects; or change a wallpaper of a display interface where the found main interface functional objects and/or the application module interfaces of the main interface functional objects are located.

After the information obtaining unit 5011 obtains the user's biological characteristic information, the first determining unit 5012 confirms the user identity information according to the obtained characteristic information, and then, the information searching module 502 determines the main interface functional objects corresponding to the user identity information; and the information processing module 504 performs preprocessing corresponding to the user identity information on the displayed main interface functional objects, and then the information displaying module 503 applies the preprocessed main interface functional objects.

In the embodiment of the present invention, the foregoing modules and units are used to identify the user identity information, and according to the user identity information, display corresponding main interface functional objects, so that the foregoing problem is solved. In an application scenario of multiple users, the main interface functional objects are not required to be repeatedly set when the user is changed, and the main interface functional objects corresponding to the user identity information are directly invoked and applied, which greatly simplifies an operation process.

FIG. 7 is a schematic structural diagram of another terminal according to an embodiment of the present invention.

The terminal device may include an identity identifying module 601, an information searching module 602, an information processing module 603, and an information displaying module 604. The information searching module 602, the information processing module 603, and the information displaying module 604 are similar to those of the foregoing embodiment and are not described repeatedly here again.

In the embodiment, the identity identifying module 601 may include:
an instruction receiving unit 6011, configured to receive a user's instruction; and
a second determining unit 6012, configured to determine identity information corresponding to the user's instruction as user identity information.

After the instruction receiving unit 6011 receives the user's instruction, the second determining unit 6012 confirms the user identity information according to the instruction, and then, the information searching module 602 determines main interface functional objects corresponding to the user identity information; the information processing module 603 performs preprocessing on the main interface functional objects and/or application module interfaces of the main interface functional objects, and then the information displaying module 604 applies the preprocessed main interface functional objects and/or application module interfaces of the main interface functional objects.

In the embodiment of the present invention, the foregoing modules and units are used to identify the user identity information, and according to the user identity information, display corresponding main interface functional objects, so that the foregoing problem is solved. In an application scenario of multiple users, the main interface functional objects are not required to be repeatedly set when the user is changed, and the main interface functional objects corresponding to the user identity information are directly invoked and applied, which greatly simplifies an operation process.

For specific implementation processes of the modules and units in the foregoing terminal, reference may be made to corresponding descriptions in the foregoing method embodiments, which is not repeatedly described here again. The terminal may be any handheld electronic device, MID, digital photo flame, and so on, that has a screen displaying, function.

The foregoing-described implementation manners of the present invention do not construct limitations to the protection scope of the present invention. Any modification, equivalent replacement, and improvement made within the spirit and principle of the present invention shall fall within the protection scope of the claims of the present invention.

## Claims

1. A method for changing a user operation interface, comprising:
determining user identity information;
according to the user identity information, searching for main interface functional objects corresponding to the user identity information; and
applying the found main interface functional objects on a preset display interface.

2. The method according to claim 1, wherein the determining the user identity information comprises:
obtaining a user's biological characteristic information; and
searching a pre-stored characteristic information base for characteristic information matching the user's biological characteristic information, and using identity information corresponding to the found matching characteristic information as the user identity information.

3. The method according to claim 1, wherein the determining the user identity information comprises:
receiving a user's instruction; and
determining identity information corresponding to the user's instruction as the user identity information.

4. The method according to any one of claims 1 to 3, further comprising:
executing a preprocessing step corresponding to the user identity information for the found main interface functional objects and/or application module interfaces of the main interface functional objects.

5. The method according to claim 4, wherein the executing the preprocessing step corresponding to the user identity information for the found main interface functional objects and/or the application module interfaces of the main interface functional objects comprises:
magnifying fonts of the found main interface functional objects and/or the application module interfaces of the main interface functional objects; or
changing positions on the preset display interface for the found main interface functional objects and/or the application module interfaces of the main interface functional objects; or
changing a wallpaper of a display interface where the found main interface functional objects and/or the application module interfaces of the main interface functional objects are located.

6. A terminal, comprising:
an identity identifying module, configured to determine user identity information;
an information searching module, configured to, according to the user identity information, search for main interface functional objects corresponding to the user identity information; and
an information displaying module, configured to apply the found main interface functional objects on a preset display interface.

7. The terminal according to claim 6, wherein the identity identifying module comprises:
an information obtaining unit, configured to obtain a user's biological characteristic information; and
a first determining unit, configured to search a pre-stored characteristic information base for characteristic information matching the user's biological characteristic information, and use identity information corresponding to the found matching characteristic information as the user identity information.

8. The terminal according to claim 6, wherein the identity identifying module comprises:
an instruction receiving unit, configured to receive a user's instruction; and
a second determining unit, configured to determine identity information corresponding to the user's instruction as the user identity information.

9. The terminal according to any one of claims 6 to 8, further comprising:
an information processing module, configured to execute a preprocessing step corresponding to the user identity information for the found main interface functional objects and/or application module interfaces of the main interface functional objects.

10. The terminal according to claim 9, wherein:
the information processing module is specifically configured to magnify fonts of the found main interface functional objects and/or the application module interfaces of the main interface functional objects; or change positions on the preset display interface for the found main interface functional objects and/or the application module interfaces of the main interface functional objects; or change a wallpaper of a display interface where the found main interface functional objects and/or the application module interfaces of the main interface functional objects are located.
